(19) Europäisches Patentamt
European Patent Office
Office européen des brevets

(11) **EP 2 275 988 A1**

(12) **EUROPEAN PATENT APPLICATION**
published in accordance with Art. 153(4) EPC

(43) Date of publication:
**19.01.2011 Bulletin 2011/03**

(51) Int Cl.:
***G06T 3/00*** *(2006.01)*      ***G06F 3/12*** *(2006.01)*

(21) Application number: **09829047.1**

(22) Date of filing: **20.11.2009**

(86) International application number:
**PCT/JP2009/069733**

(87) International publication number:
**WO 2010/061799 (03.06.2010 Gazette 2010/22)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **28.11.2008 JP 2008304699**

(71) Applicant: **Mimaki Engineering Co., Ltd. Tomi-shi, Nagano 389-0512 (JP)**

(72) Inventors:
• **SEKI Kazutomo**
  **Tomi-shi**
  **Nagano 389-0512 (JP)**
• **ONOZAWA Yoshiki**
  **Tomi-shi**
  **Nagano 389-0512 (JP)**

• **HIGUCHI Masaya**
  **Tomi-shi**
  **Nagano 389-0512 (JP)**
• **KONO Nobuyuki**
  **Tomi-shi**
  **Nagano 389-0512 (JP)**
• **KOMATSU Kenichiro**
  **Tomi-shi**
  **Nagano 389-0512 (JP)**
• **ONO Nobuyuki**
  **Tomi-shi**
  **Nagano 389-0512 (JP)**

(74) Representative: **Gendron, Vincent Christian S.A. Fedit-Loriot 38, avenue Hoche 75008 Paris (FR)**

(54) **IMAGE SHAPE DEFORMATION DEVICE, IMAGE SHAPE DEFORMATION METHOD, AND IMAGE SHAPE DEFORMATION PROGRAM**

(57)     An image shape transforming device 10 according to an embodiment of the present invention transforms a shape of an image for a 3D printer that prints on the surface of a medium that has a three-dimensional shape print band by print band. The image shape transforming device 10 includes a relative curvature calculating means 11 for calculating a relative curvature for each print band relative to a reference print band among the print bands, and an image scaling means 12 that scales the image of each print band according to the relative curvature of the print band.

**EP 2 275 988 A1**

**Description**

[Technical Field]

The present invention relates to an image shape transforming device, a method of transforming an image shape, and a computer program for transforming image shape that transform a shape of an image for a 3D (three-dimensional) printer that prints images on the surface of a medium that has a three-dimensional shape.

[Background Art]

3D printers that print images on the surface of a medium that has a three-dimensional shape are well-known. Such a 3D printer is disclosed in Patent Document 1. The 3D printer prints the image on the surface of the medium by rotating the medium about the X-axis (B-axis) of a Cartesian coordinate system (XYZ).
A remedial measure to the above problem, that is, a method for correcting the distortion of an image when printing an image on a spherical printing surface has been proposed in Patent Document 1. What is proposed is a method that a host computer that controls the 3D printer is used to intersperse blank spots between ink dots that are lined up along the Y-axis, in which the image is printed, when forming ink dots by spraying ink from an inkjet head on the spherical printing surface disposed directly below the inkjet head.

[Conventional Art Documents]

[Patent Documents]

[Patent Document 1] Japanese Patent Application Laid-open No. 2007-8110

[Disclosure of Invention]

[Problem to be Solved by the Invention]

However, if the image, which is to be printed on a plane surface, is printed as it is on the surface of the medium that has a three-dimensional shape, such as a spherical surface or a hemispherical surface, the printed image tends to appear distorted along the X-axis. For example, when viewed from above the equator of the spherical surface, the lower edge of the printed image nearer to the equator appears longer and the image appears to shrink gradually toward the poles of the spherical surface. The image thus appears distorted.
It is an object of the present invention to provide an image shape transforming device, a method of transforming image shape, and a computer program for transforming an image shape that enable reduction in the apparent distortion of a printed image when printing the image on the surface of the medium that has a three-dimensional shape.

[Means for Solving Problem]

An image shape transforming device according to one aspect of the present invention transforms a shape of an image for a 3D printer that prints print band by print band on a surface of a medium that has a three-dimensional shape. The image shape transforming device includes a relative curvature calculating means for calculating, for each print band, a relative curvature relative to a reference print band among the print bands; and an image scaling means for enlarging or reducing the image of each print band according to the relative curvature of the print band.
Furthermore, a method according to another aspect of the present invention is a method of transforming image shape for a 3D printer that prints print band by print band on a surface of a medium that has a three-dimensional shape. The method includes a step of calculating, for each print band, a relative curvature relative to a reference print band among the print bands; and a step of enlarging or reducing the image of each print band according to the relative curvature of the print band.
Moreover, a computer program according to still another aspect of the present invention is a computer program for transforming image shape for a 3D printer that prints print band by print band on a surface of a medium that has a three-dimensional shape. The computer program causes a computer to function as a relative curvature calculating means for calculating, for each print band, a relative curvature relative to a reference print band among the print bands; and an image scaling means for enlarging or reducing the image of each print band according to the relative curvature of the print band.
According to the present invention, because the image is enlarged or reduced depending on a relative curvature of the medium, apparent distortion of a printed image can be reduced when the image is printed on the medium having a three-dimensional shape.

The relative curvature calculating means preferably calculates, for each print band, the relative curvature that represents a circumference of the medium relative to a reference circumference of the medium. The reference circumference is the circumference of the reference print band. Moreover, it is preferable that the image scaling means enlarges the image as the relative curvature gets smaller and it reduces the image as the relative curvature gets larger.

[Effect of the Invention]

According to the present invention, an apparent distortion of a printed image when viewed from a given observation point can be reduced when an image is printed on the surface of a medium that has a three-dimensional shape.

[Brief Description of Drawings]

[Fig. 1] Fig. 1 is a block diagram of configuration of a 3D printer and a printer control device according to an embodiment of the present invention.
[Fig. 2] Fig. 2 is a schematic diagram of principal parts of the 3D printer shown in Fig. 1.
[Fig. 3] Fig. 3 is an electrical block diagram of the printer control device shown in Fig. 1.
[Fig. 4] Fig. 4 is an electrical block diagram of an image shape transforming device according to an embodiment of the present invention.
[Fig. 5] Fig. 5 is a schematic diagram for explaining a method of calculation of a relative curvature.
[Fig. 6] Fig. 6 is a drawing showing the relative curvature for all print bands.
[Fig. 7] Figs. 7(a) and 7(b) are schematic diagrams for explaining a method of transforming image shape by the image shape transforming device shown in Fig. 4.
[Fig. 8] Fig. 8 is a drawing showing examples of coordinates data and head data.
[Fig. 9] Fig. 9 is a schematic of functions of a 3D coordinates generating unit.
[Fig. 10] Fig. 10 is a flowchart of a method of transforming image shape according to an embodiment of the present invention.
[Fig. 11] Fig. 11 is a schematic diagram for explaining a conventional image expansion method.
[Fig. 12] Figs. 12(a) and 12(b) are drawings of a conventional print result.
[Fig. 13] Figs. 13(a) and 13(b) are drawings of a print result according to the present invention.
[Fig. 14] Fig. 14 is a schematic diagram for explaining a method of calculation of a relative curvature of a medium that has an ellipsoidal shape.

[Mode(s) of Carrying Out the Invention]

Exemplary embodiments of the present invention are explained below with reference to the accompanying drawings. The same reference numerals are assigned to the parts in different figures if those parts are identical or are equivalent.

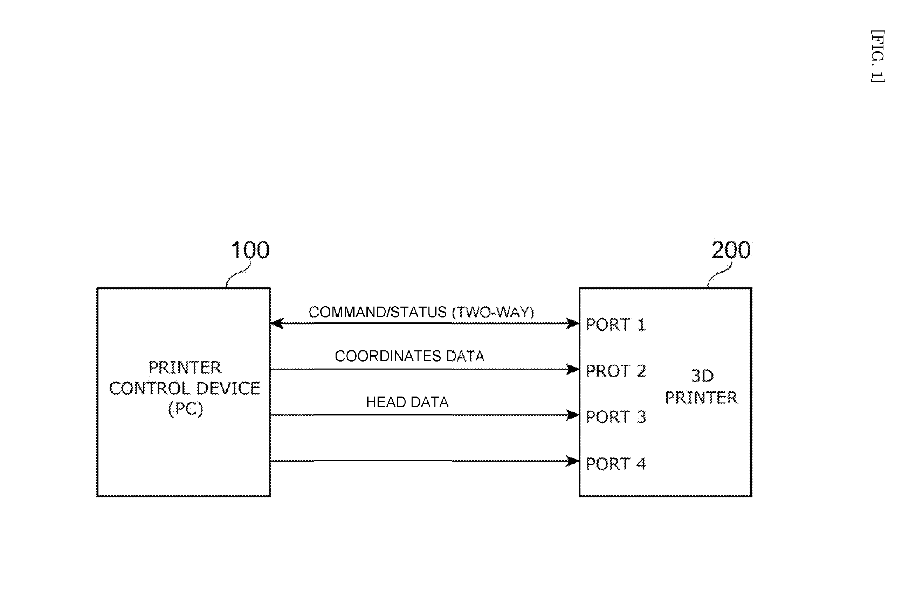

Fig. 1 is a block diagram of a 3D printer and a printer control device according to an embodiment of the present invention. An image shape transforming device according to the embodiment of the present invention is incorporated in a printer control device 100 that controls a 3D printer 200.

A personal computer (PC), for example, can be used as the printer control device 100. The printer control device 100 carries out a two-way communication with the 3D printer 200 through commands and status using, for example, the Ethernet (10Base-T) system. Specifically, the printer control device 100 transmits to the 3D printer 200 a command to obtain information about the status of the 3D printer 200. Upon receiving the command from the printer control device 100, the 3D printer 200 returns to the printer control device 100 information about its current status. The information about the status is information indicating whether the 3D printer 200 is ready to print.

If the information about the status received from the 3D printer 200 indicates that the 3D printer 200 is ready to print, the printer control device 100 sequentially transmits coordinates data and head data, required for the printing of an image, to the 3D printer 200. The 3D printer 200 stores the coordinates data and the head data sequentially in a memory.

Thereafter, when the printer control device 100 outputs a command for printing, the 3D printer 200 receives the command, and carries out printing based on the coordinates data and the head data.

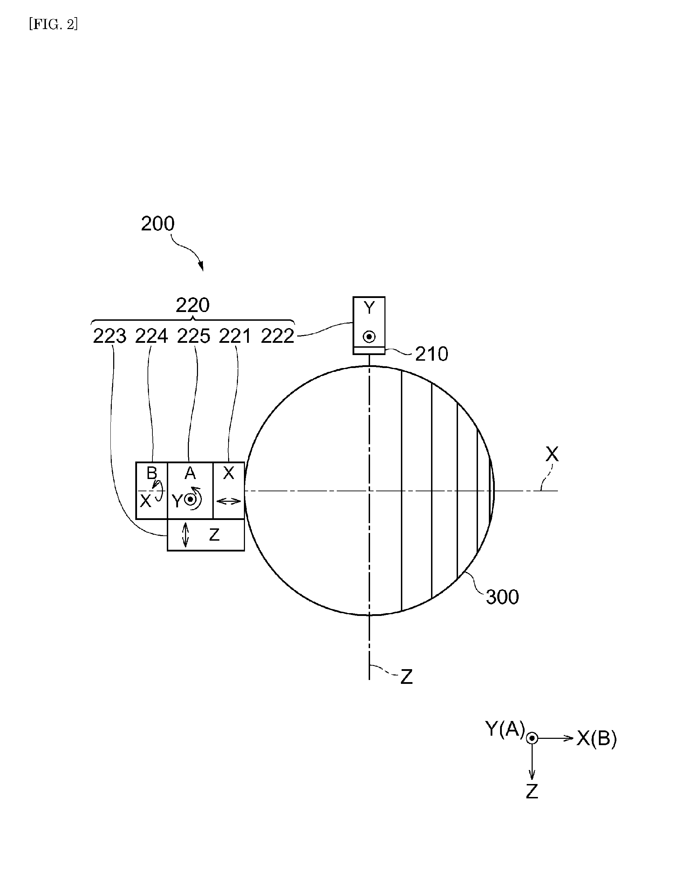

Fig. 2 is a schematic diagram of the principal parts of the 3D printer 200. The 3D printer 200 shown in Fig. 2 is a printer that prints images on the surface of a medium 300 that has a three-dimensional shape, for example, a spherical shape. The 3D printer 200 includes a head 210 from which ink is sprayed onto the surface of the medium 300, and a supporting unit 220 that supports the medium 300 and the head 210.

The supporting unit 220 includes an X-axial movement part 221 capable of moving the medium 300 along the X-axis, a Z-axial movement part 223 capable of moving the medium 300 along the Z-axis, a B-axial rotating part 224 capable of rotating the medium 300 about the X-axis (B-axis), an A-axial rotating part 225 capable of revolving the medium 300 about the Y-axis (A-axis), and a Y-axial movement part 222 capable of moving the head 210 along the Y-axis.

In addition to determining the position of the medium 300 and the head 210 based on the coordinates data received from the printer control device 100, the supporting unit 220 determines print bands on which to print by gradually rotating the medium 300 about the A-axis. The supporting unit 220 rotates the medium 300 about the B-axis and enables printing on the print band, the width of which matches that of the head 210.

The head 210 controls spraying of the ink from a plurality of nozzles and controls the quantity of the ink based on printing parameters in the coordinates data and the head data received from the printer control device 100.

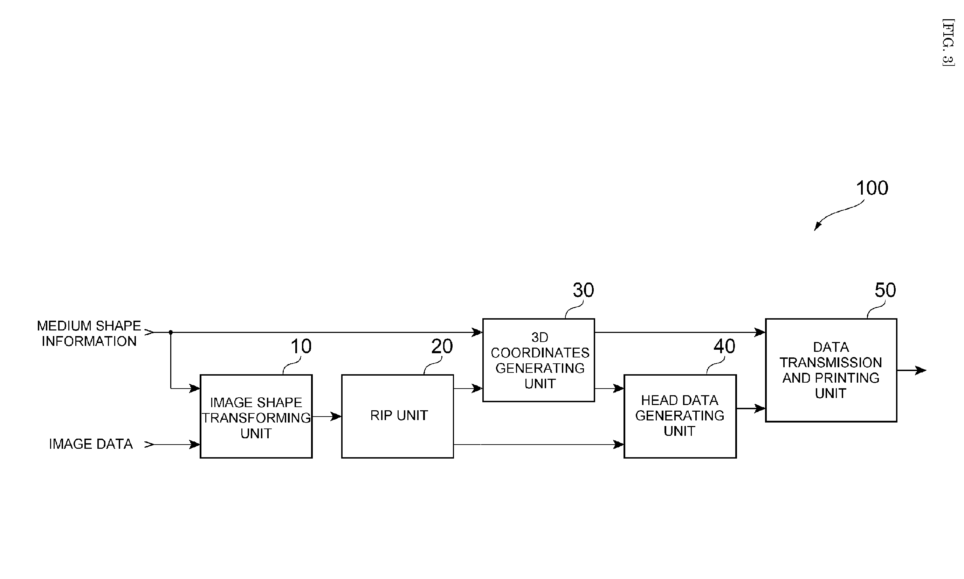

Fig. 3 is a block diagram of the printer control device 100. As shown in Fig. 3, the printer control device 100 includes an image shape transforming unit (the image shape transforming device according to an embodiment of the present invention) 10, a RIP (Raster Image Processor) 20, a 3D coordinates generating unit 30, a head data generating unit 40, and a data transmission and printing unit 50.

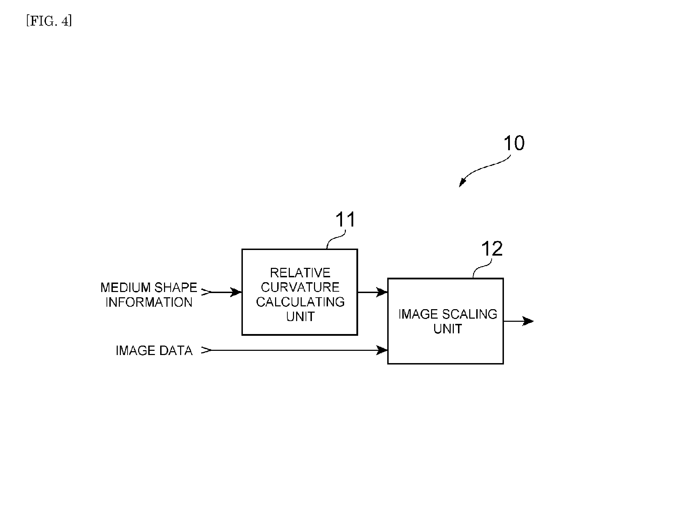

The image shape transforming unit 10 receives medium shape information that indicates the shape of the medium 300 and an image data to be printed, and transforms the image data according to the shape of the medium 300. As shown in Fig. 4, the image shape transforming unit 10 includes a relative curvature calculating unit 11 and an image scaling unit 12.

The relative curvature calculating unit 11 calculates, for each print band, a relative curvature relative to a reference print band among the print bands. Specifically, the relative curvature calculating unit 11 calculates, for each print band, the relative curvature that indicates a circumference of the medium 300 relative to a reference circumference. The reference circumference is the circumference of the medium 300 at the position of the reference print band.

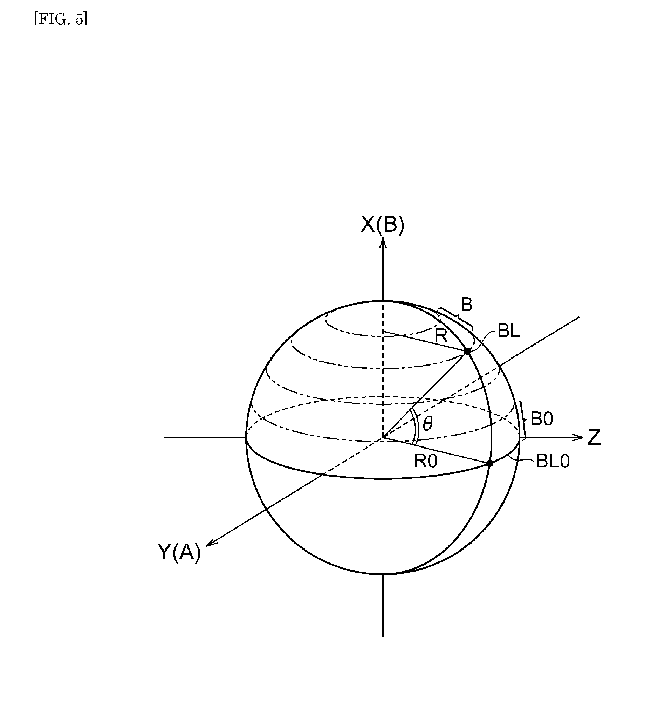

For example, the relative curvature calculating unit 11 calculates the circumference for each print band. Then, the relative curvature calculating unit 11 takes one of the print bands as the reference print band and treats the circumference of the reference print band as the reference circumference. For example, as shown in Fig. 5, assume that, among the print bands along the B-axis of the spherical medium 300, the print band that is closest to the equator is taken as a reference print band B0. Then, a reference circumference BLO of the reference print band B0 and a circumference BL of a non-reference print band B can be calculated by using the following equations:

$$BL0 = 2\pi R0$$

$$BL = 2\pi R = 2\pi R0 \cos\theta$$

where R0 is a radius of rotation of the reference print band B0 about the B-axis, or a radius of the medium 300 at its equator, R is a radius of rotation of the non-reference print band B about the B-axis, and θ is a central angle of the non-reference print band B relative to the reference print band B0.

The relative curvature calculating unit 11 calculates, for each print band, a relative curvature RC that represents the circumference BL of the print band relative to the reference circumference BLO by using the following equation:

$$RC = BL/BL0 = \cos\theta$$

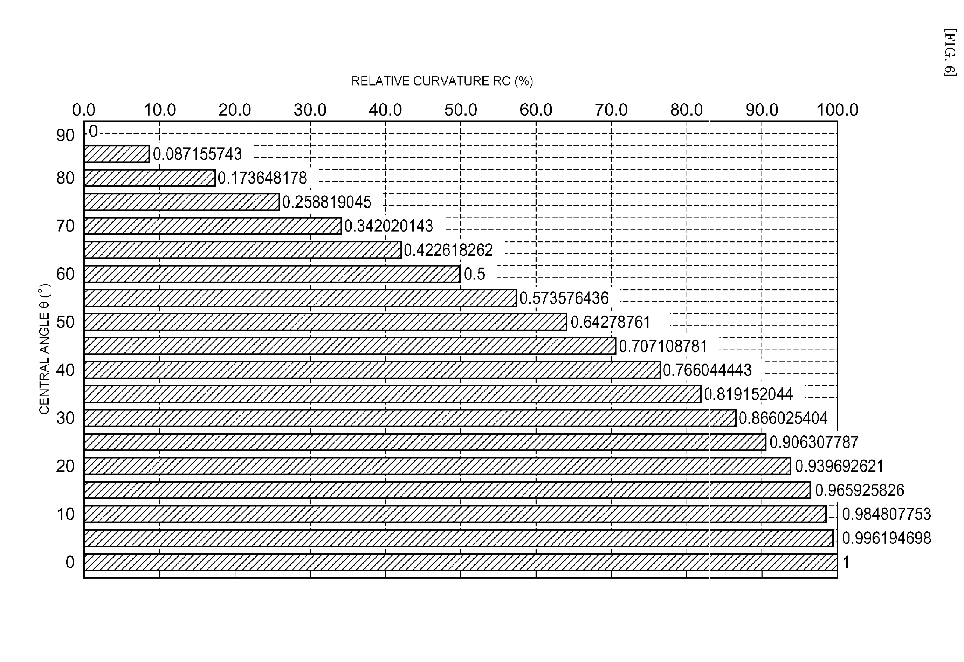

The relative curvature calculating unit 11 supplies, as shown in Fig. 6, the relative curvature RC calculated for each print band to the image scaling unit 12.

The image scaling unit 12 enlarges or reduces the image in each print band depending on the relative curvature RC at the position of the print band under consideration. Specifically, the image scaling unit 12 determines, for each print band, a scaling factor ER for the image by using the following equation:

$$ER = (1/RC)$$

Subsequently, the image scaling unit 12 enlarges or reduces the image of each print band according to the scaling factor for the print band under consideration.

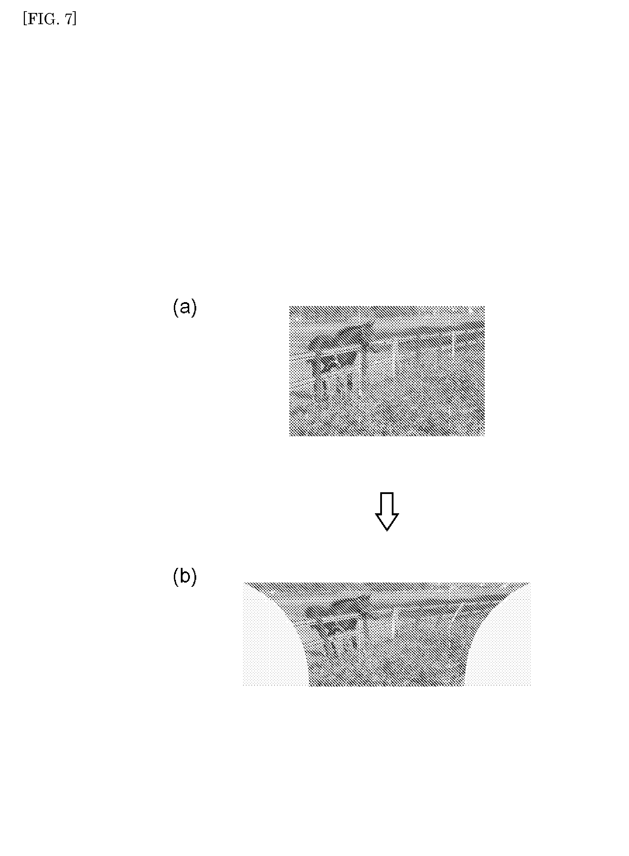

Thus, the image scaling unit 12 enlarges a rectangular image, shown in Fig. 7(a), as the relative curvature gets smaller, and reduces the image as the relative curvature gets larger, as shown in Fig. 7(b). Particularly, if the medium 300 has a spherical shape, the image scaling unit 12 enlarges the image gradually as one goes from the equator toward the poles of the medium 300 along the B-axis.

Returning to the explanation of Fig. 3, the RIP unit 20 receives image data for a PC from the image shape transforming unit 10 and converts the image data to image data for a printer. The RIP unit 20, for example, generates image information, such as an image size, and raster data from the image data from the image shape transforming unit 10. The RIP unit 20 supplies the image information to the 3D coordinates generating unit 30 and supplies the raster data to the head data generating unit 40.

The 3D coordinates generating unit 30 receives the raster data from the RIP unit 20 and also receives medium shape information, and it generates coordinates data so that the 3D printer 200 can carry out printing.

The head data generating unit 40 receives the raster data from the RIP unit 20 and the coordinates data from the 3D coordinates generating unit 30, and it generates the head data that has a one-to-one correspondence with the coordinates data so that the 3D printer 200 can carry out printing.

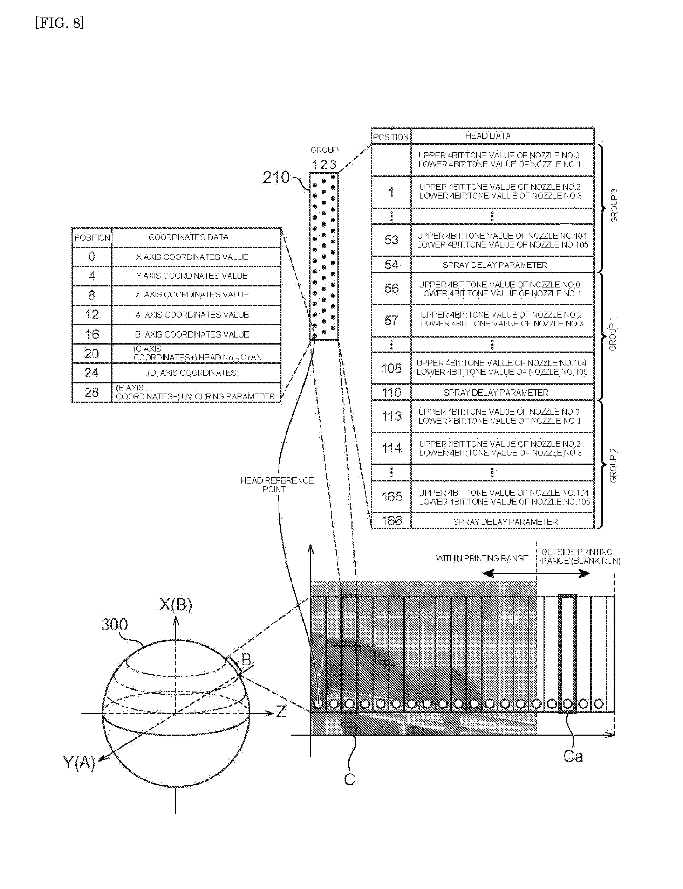

Fig. 8 shows examples of the coordinates data and the head data. In the example shown in Fig. 8, printing is carried out using the head 210 that has 318 nozzles arranged in three groups (columns), each column having 106 nozzles. The coordinates data and the head data are generated for every print cell C, in a one-to-one correspondence, of a print band B on the medium 300. The width of the print band and the size of the print cell are determined by the size of the head, that is, the number of nozzles and the distance between the nozzles.

For example, the position of the bottom left nozzle of the head 210 can be defined as a reference point, and the coordinates data represents coordinate values with respect to the reference point. Specifically, the coordinates data includes a plurality of coordinates values for controlling a position of the supporting unit 220 of the 3D printer 200 that supports the medium 300 and the head 210. In other words, the coordinates data includes an X-axis coordinates value for controlling the position of the X-axial movement part 221, a Y-axis coordinates value for controlling the position of the Y-axial movement part 222, a Z-axis coordinates value for controlling the position of the Z-axial movement part 223, a B-axis coordinates value for controlling the position of the B-axial movement part 224, and an A-axis coordinates value for controlling the position of the A-axial movement part 225.

In the present embodiment, an example is presented in which position controls in the C-axis, the D-axis, and the E-axis are not carried out. If position controls in these directions are to be carried out, the coordinates data can be modified to include the coordinates value of the C-axis, the D-axis, and the E-axis.

A head number corresponding to the ink color (such as black, cyan, magenta, and yellow) and UV (ultraviolet) curing parameters are appended to the coordinates data.

The coordinates value, the head number, and the UV curing parameters are stored in the memory at a storage position associated with them.

The head data is the raster data for one spraying unit of one head for the 3D printer. The head data and the coordinates data have a one-to-one correspondence. The head data determines a tone value for each nozzle from which ink is sprayed. The head data also determines a spray delay parameter between nozzle groups (between the columns of nozzles).

The tone values of the nozzles and the spray delay parameters between the nozzle groups are stored in the memory at a storage position associated with them.

A portion that falls outside the printing range, that is, a print cell Ca in a blank run range, is handled by not specifying the head number included in the coordinates data and not by specifying the tone value of the nozzle included in the head data. The coordinates data and the head data are supplied to the data transmission and printing unit 50.

For making a resolution of the print bands uniform, the 3D coordinates generating unit 30 adjusts an ink spray interval and a head-feed distance for each print band according to the relative curvature and a printing range (for example, circumference).

Specifically, the 3D coordinates generating unit 30 determines, similarly as the relative curvature calculating unit 11, the circumference BL and the relative curvature RC for each band and also determines an ink spray coordinates interval Si (rotation angle in degrees in case of a hemispherical shape) based on the circumference BL, the relative curvature RC, and a desired resolution by using the following equation:

$$Si = 360/(BL/Sr) \times (1/RC)$$

where Sr is a dot interval for resolution.

The 3D coordinates generating unit 30 sets a value of each coordinate that is mentioned above based on the ink spray coordinates interval Si.

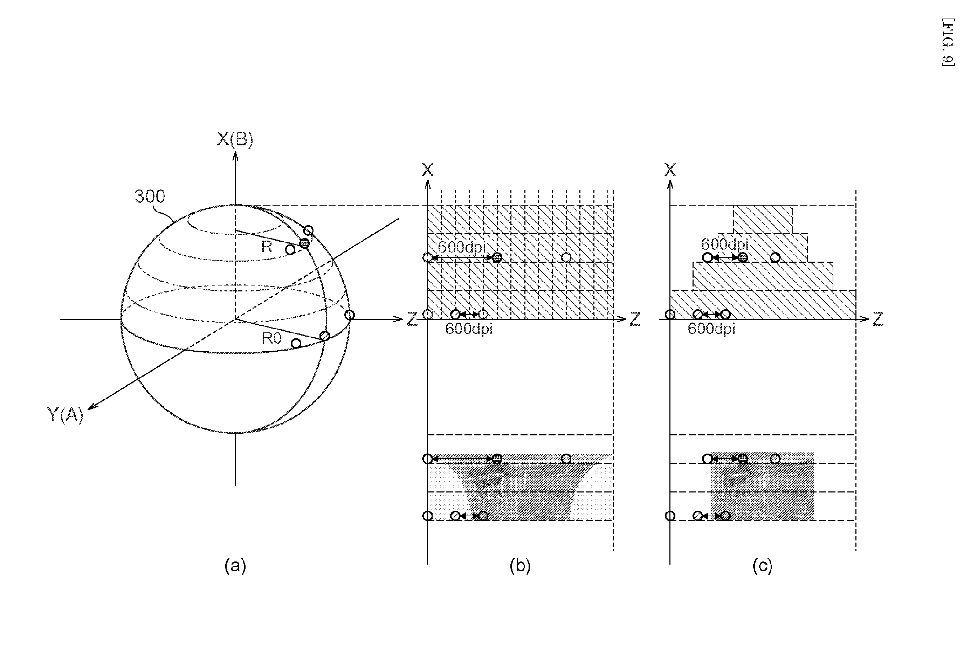

As a result, as shown in Fig. 9, the resolution of all the print bands can be made uniform. Fig. 9(b) is a drawing of the surface of the medium 300 that is spherical, which is shown in Fig. 9(a), and expanded into a rectangle. In Fig. 9 (b), dashed lines indicate rotation angles relative to the B-axis. The interval between the rotation angles is equal. As shown in Fig. 9(b), the 3D coordinates generating unit 30 increases the ink spray coordinates interval Si as the relative curvature RC gets smaller and reduces the ink spray coordinates interval Si as the relative curvature RC gets larger. In other words, in case of the spherical medium 300, the 3D coordinates generating unit 30 increases the ink spray coordinates interval Si as one goes from the equator toward the poles of the medium 300. As a result, if the print band length is converted into the circumference as shown in Fig. 9(c), the ink spray coordinates interval Si, that is, the resolution, can be made uniform for all the print bands.

Returning to the explanation of Fig. 3, the data transmission and printing unit 50 performs printing control of the 3D printer 200. For example, the data transmission and printing unit 50 transmits a command to the 3D printer 200 to check its status as explained above. If the 3D printer 200 is ready to print, the data transmission and printing unit 50 sequentially outputs the coordinates data it received from the 3D coordinates generating unit 30 and the head data it received from the head data generating unit 40 to the 3D printer 200. Thereafter, when the data transmission and printing unit 50 outputs a print command, the 3D printer 200 prints the image on the surface of the medium 300.

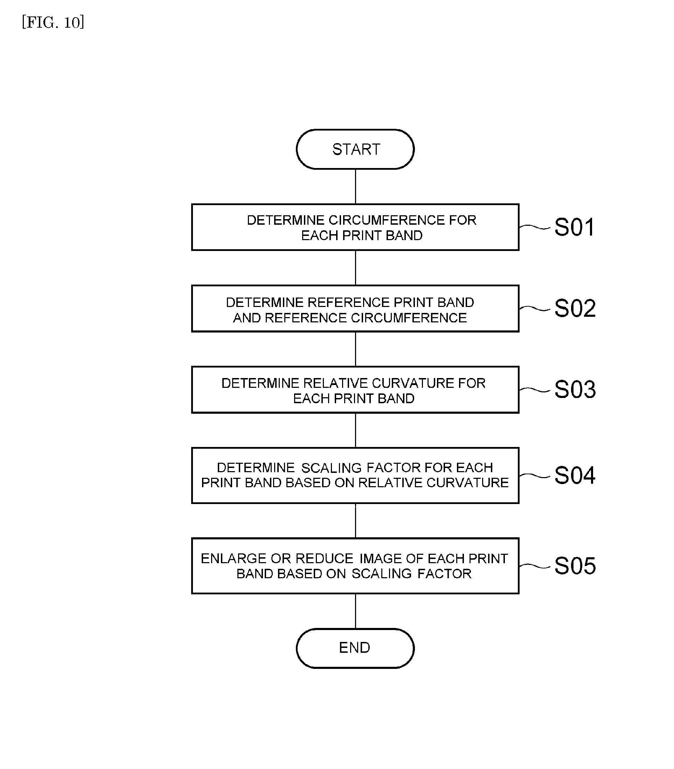

An operation of the image shape transforming device 10 and a method of transforming image shape according to an embodiment of the present invention are described below. Fig. 10 is a flowchart of an image shape transformation process.

The image shape transforming device 10 principally has a configuration of a computer that includes a CPU (Central Processing Unit), a ROM (Read-Only Memory), a RAM (Random Access Memory), etc. The functions of the image shape transforming device 10 shown in Fig. 4 can be realized by the CPU by executing a computer program for transforming image shape that is first loaded to the ROM or the RAM. In other words, an overall control of the operation of the image shape transforming device 10 is carried out by the CPU for the execution of the computer program for transforming image shape, and the image shape transformation process shown in the flowchart in Fig. 10 is performed.

The computer program for transforming image shape can be made available on a recording medium such as a floppy disk, a CD-ROM (Compact Disk-ROM), a DVD (Digital Versatile Disk), a ROM, or a semiconductor memory, or over a network as a computer data signal superimposed on a carrier wave. The image shape transforming device 10 includes a reading device (not shown) for reading data such as computer programs from the recording medium, and a communication device (not shown) for acquiring obtaining computer programs over the network.

In the current example, the CPU of the image shape transforming device 10 performs the functions of these devices. The image shape transforming device 10 can also be an ASIC (Application-Specific Integrated Circuit) or an FPGA (Field-Programmable Gate Array) incorporated in the printer control device 100. The image shape transforming device 10 can have a configuration that includes a CPU that performs an overall control of the printer control device 100, and an ASIC or an FPGA. In the current example, a part of the image shape transforming device 10 is configured by the ASIC or the FPGA that is distinct from the CPU. For example, the parts in the image shape transforming device 10 that carry out various calculation processes, such as the relative curvature calculating unit 11 and the image scaling unit 12, can be configured by the ASIC or the FPGA. If configured by the ASIC or the FPGA, the relative curvature calculating unit 11 and the image scaling unit 12 can perform their respective calculation processes appropriately and quickly.

The relative curvature calculating unit 11 calculates the circumference BL for each print band B (Step S01), and in addition to determining the reference print band B0 among the print bands, also calculates the reference circumference BLO of the reference print band B0 (Step S02). Next, the relative curvature calculating unit 11 determines, for each print band, the relative curvature RC that indicates the circumference BL relative to the reference circumference BLO (Step S03) (See Fig. 6).

The image scaling unit 12 determines, for each print band, the scaling factor ER based on the relative curvature RC (Step S04), and the image is enlarged or reduced in each print band according to the scaling factor ER (Step S05) (Fig. 7).

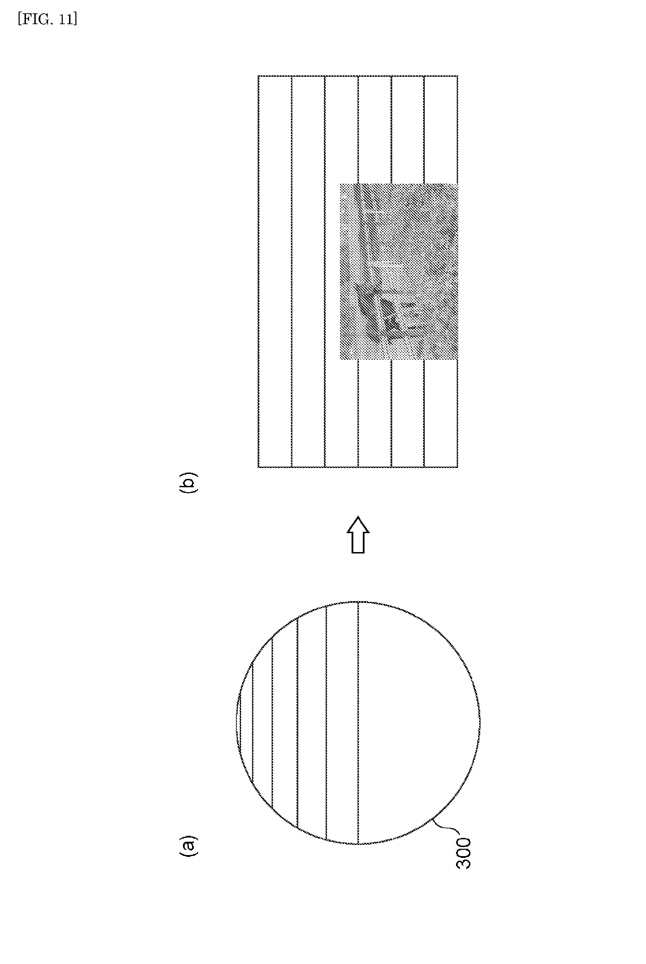

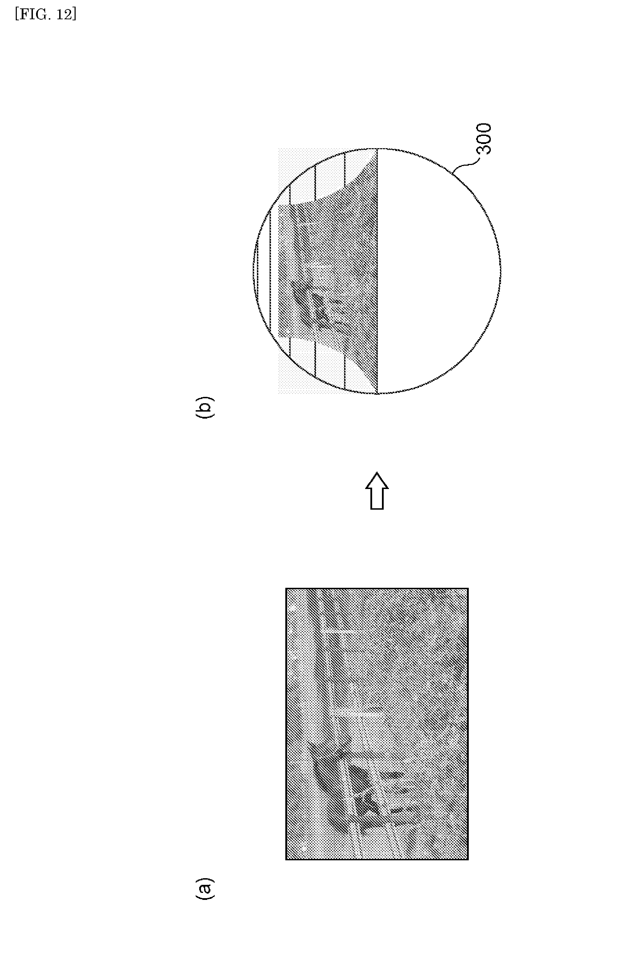

In a conventional image expansion method, as shown in Fig. 11, the surface of the hemispherical medium 300 is expanded into a rectangle, and a rectangular image is printed on the surface. When the rectangular image is printed as it is on the hemispherical medium 300, the image appears distorted as shown in Fig. 12. Specifically, when viewed from above the equator of the medium 300 (that is, when viewed from the surface of the paper on which Fig. 12 has been printed), the lower edge of the image, which is nearer the equator, appears longer and the image appears to shrink toward the pole of the spherical surface. The image thus appears distorted.

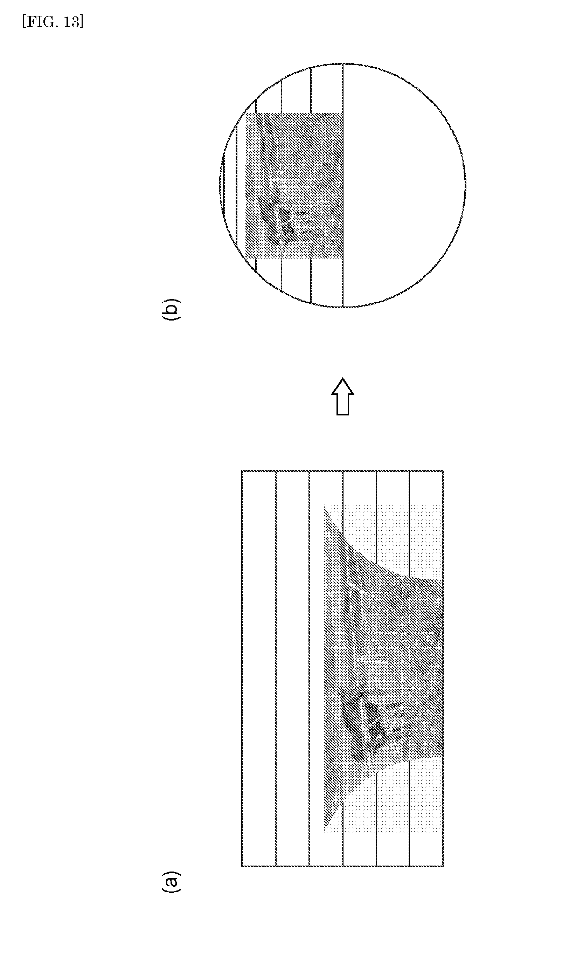

In contrast, as shown in Fig. 13(a), the image shape transforming device 10, the method of transforming image shape, and the computer program for transforming image shape according to the embodiment of the present invention, enlarge or reduce the image in each print band according to the relative curvature of the medium 300 at the position of the print band under consideration. Specifically, the image is enlarged as the relative curvature decreases and reduced as the relative curvature increase. Accordingly, as shown in Fig. 13(b), when a rectangular image is printed on the surface of the medium 300 that has a three-dimensional shape, there will be much reduced apparent distortion when viewed from a given observation point.

The invention is not limited to the embodiments explained above. That is, the invention can be modified in various ways. For example, the embodiments are explained by citing a spherical or hemispherical medium as an example; however, the invention can be applied to printing on a medium of various other three-dimensional shapes. For example, the present invention can be applied even if the medium is ellipsoidal or calabash-shaped, and an effect of reduced apparent distortion of the printed image when viewed from a given observation point can be realized.

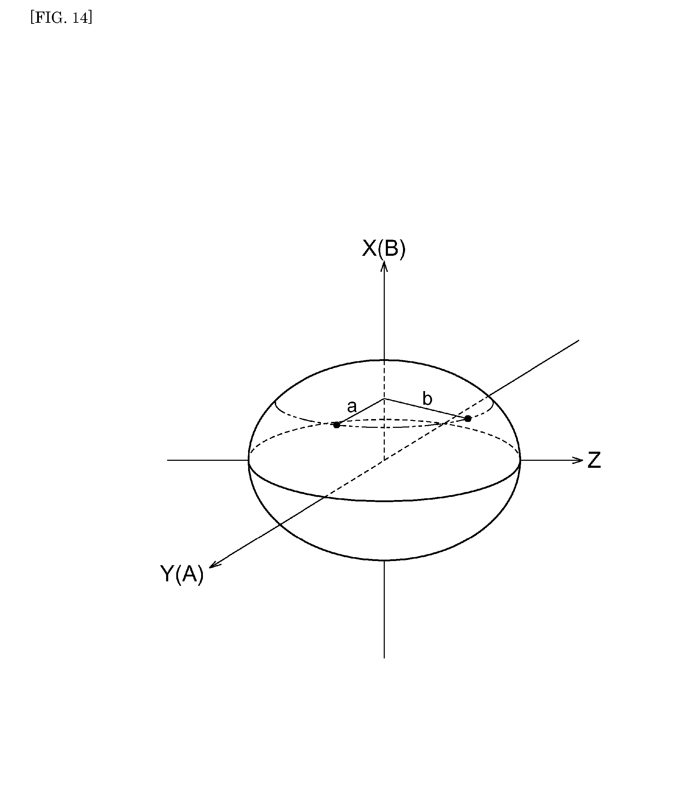

As a modification example, a method of calculation of the relative curvature of an ellipsoid is explained below. As shown in Fig. 14, the circumference BL of a print band of a medium that has an ellipsoidal shape is determined by using the following equation:

$$\mathrm{BL}=\pi\times\sqrt{2\left(\left(\mathrm{a}^{2}+\mathrm{b}^{2}\right)\right)-\left(\mathrm{a}-\mathrm{b}\right)^{2}/2.2}$$

where a is a first radius of rotation of the medium and b is a second radius of rotation of the medium. One of the determined circumferences is taken as the reference circumference BLO, and the relative curvature RC that represents the circumference BL relative to the reference circumference BLO is calculated for each print band. The image can then be enlarged or reduced according to the relative curvature RC.

The coefficient 2.2 in the above equation can be changed to 2.1 to prevent an approximation value from becoming greater than a length of the medium.

In the embodiments explained here, the reference circumference of the medium 300 is taken as the circumference of the reference print band among the print bands, and the relative curvature calculating unit 11 calculates the relative curvature of each print band that represents the circumference of the medium 300 relative to the reference circumference. In an alternative method, a reference curvature 1/R0 can be taken as the curvature of the reference print band among the print bands, and the relative curvature calculating unit 11 can be configured to calculate the relative curvature that represents a curvature 1/R of the print band relative to the reference circumference. In this alternative method, the image scaling unit 12 can enlarge the image as the relative curvature gets larger, and it can reduce the image as the relative curvature gets smaller.

[Industrial Applicability]

The invention is useful for reducing an apparent variation of density of an image printed on the surface of the medium that has a three-dimensional shape.

[Explanations of Letters or Numerals]

| | |
|---|---|
| 10 | Image shape transforming unit (Image shape transforming device) |
| 11 | Relative curvature calculating unit (Relative curvature calculating means) |
| 12 | Image scaling unit (Image scaling means) |
| 20 | RIP unit |
| 30 | 3D coordinates generating unit |
| 40 | Head data generating unit |
| 50 | Data transmission and printing unit |
| 100 | Printer control device |
| 200 | 3D printer |
| 210 | Head |
| 220 | Supporting unit |
| 221 | X-axial movement part |
| 222 | Y-axial movement part |
| 223 | Z-axial movement part |
| 224 | B-axial rotating part |
| 225 | A-axial rotating part |
| 300 | Medium |

**Claims**

1. An image shape transforming device that transforms a shape of an image for a 3D printer that prints print band by print band on a surface of a medium that has a three-dimensional shape, the image shape transforming device comprising:

   a relative curvature calculating means for calculating, for each print band, a relative curvature relative to a reference print band among the print bands; and
   an image scaling means for enlarging or reducing the image of each print band according to the relative curvature of the print band.

2. The image shape transforming device according to claim 1, wherein
   the relative curvature calculating means calculates, for each print band, the relative curvature that represents a circumference of the medium relative to a reference circumference of the medium, the reference circumference being the circumference of the reference print band.

3. The image shape transforming device according to claim 2, wherein
   the image scaling means enlarges the image as the relative curvature gets smaller.

4. The image shape transforming device according to claim 2, wherein
   the image scaling means reduces the image as the relative curvature gets larger.

5. A method of transforming image shape for a 3D printer that prints print band by print band on a surface of a medium that has a three-dimensional shape, the method comprising:

   a step of calculating, for each print band, a relative curvature relative to a reference print band among the print bands; and
   a step of enlarging or reducing the image of each print band according to the relative curvature of the print band.

6. A computer program for transforming image shape for a 3D printer that prints print band by print band on a surface of a medium that has a three-dimensional shape, the computer program causing a computer to function as:

   a relative curvature calculating means for calculating, for each print band, a relative curvature relative to a reference print band among the print bands; and
   an image scaling means for enlarging or reducing the image of each print band according to the relative curvature of the print band.

[FIG. 1]

[FIG. 2]

[FIG. 3]

[FIG. 4]

10

11

12

MEDIUM SHAPE INFORMATION → RELATIVE CURVATURE CALCULATING UNIT → IMAGE SCALING UNIT →

IMAGE DATA →

[FIG. 5]

[FIG. 6]

RELATIVE CURVATURE RC (%)

| CENTRAL ANGLE θ (°) | Value |
|---|---|
| 90 | 0 |
| 80 | 0.087155743 |
| | 0.173648178 |
| 70 | 0.258819045 |
| | 0.342020143 |
| 60 | 0.422618262 |
| | 0.5 |
| 50 | 0.573576436 |
| | 0.64278761 |
| 40 | 0.707108781 |
| | 0.766044443 |
| 30 | 0.819152044 |
| | 0.866025404 |
| 20 | 0.906307787 |
| | 0.939692621 |
| 10 | 0.965925826 |
| | 0.984807753 |
| 0 | 0.996194698 |
| | 1 |

CENTRAL ANGLE θ (°)

[FIG. 7]

(a)

(b)

[FIG. 8]

| POSITION | HEAD DATA | |
|---|---|---|
| | UPPER 4BIT:TONE VALUE OF NOZZLE NO.0<br>LOWER 4BIT:TONE VALUE OF NOZZLE NO.1 | GROUP 3 |
| 1 | UPPER 4BIT:TONE VALUE OF NOZZLE NO.2<br>LOWER 4BIT:TONE VALUE OF NOZZLE NO.3 | |
| ⋮ | ⋮ | |
| 53 | UPPER 4BIT:TONE VALUE OF NOZZLE NO.104<br>LOWER 4BIT:TONE VALUE OF NOZZLE NO.105 | |
| 54 | SPRAY DELAY PARAMETER | |
| 56 | UPPER 4BIT:TONE VALUE OF NOZZLE NO.0<br>LOWER 4BIT:TONE VALUE OF NOZZLE NO.1 | GROUP 1 |
| 57 | UPPER 4BIT:TONE VALUE OF NOZZLE NO.2<br>LOWER 4BIT:TONE VALUE OF NOZZLE NO.3 | |
| ⋮ | ⋮ | |
| 108 | UPPER 4BIT:TONE VALUE OF NOZZLE NO.104<br>LOWER 4BIT:TONE VALUE OF NOZZLE NO.105 | |
| 110 | SPRAY DELAY PARAMETER | |
| 113 | UPPER 4BIT:TONE VALUE OF NOZZLE NO.0<br>LOWER 4BIT:TONE VALUE OF NOZZLE NO.1 | GROUP 2 |
| 114 | UPPER 4BIT:TONE VALUE OF NOZZLE NO.2<br>LOWER 4BIT:TONE VALUE OF NOZZLE NO.3 | |
| ⋮ | ⋮ | |
| 165 | UPPER 4BIT:TONE VALUE OF NOZZLE NO.104<br>LOWER 4BIT:TONE VALUE OF NOZZLE NO.105 | |
| 166 | SPRAY DELAY PARAMETER | |

GROUP
1 2 3

210

| POSITION | COORDINATES DATA |
|---|---|
| 0 | X AXIS COORDINATES VALUE |
| 4 | Y AXIS COORDINATES VALUE |
| 8 | Z AXIS COORDINATES VALUE |
| 12 | A AXIS COORDINATES VALUE |
| 16 | B AXIS COORDINATES VALUE |
| 20 | (C AXIS COORDINATES+) HEAD No.=CYAN |
| 24 | (D AXIS COORDINATES) |
| 28 | (E AXIS COORDINATES+) UV CURING PARAMETER |

HEAD REFERENCE
POINT

WITHIN PRINTING RANGE

OUTSIDE PRINTING
RANGE (BLANK RUN)

X(B)

300

B

Z

Y(A)

C

Ca

[FIG. 9]

[FIG. 10]

```
                    ┌─────────────┐
                    │    START    │
                    └──────┬──────┘
                           │
         ┌─────────────────────────────────────┐
         │  DETERMINE CIRCUMFERENCE FOR        │ ~S01
         │       EACH PRINT BAND               │
         └─────────────────┬───────────────────┘
                           │
         ┌─────────────────────────────────────┐
         │  DETERMINE REFERENCE PRINT BAND     │ ~S02
         │    AND REFERENCE CIRCUMFERENCE      │
         └─────────────────┬───────────────────┘
                           │
         ┌─────────────────────────────────────┐
         │  DETERMINE RELATIVE CURVATURE FOR   │ ~S03
         │        EACH PRINT BAND              │
         └─────────────────┬───────────────────┘
                           │
         ┌─────────────────────────────────────┐
         │  DETERMINE SCALING FACTOR FOR EACH  │ ~S04
         │ PRINT BAND BASED ON RELATIVE CURVATURE │
         └─────────────────┬───────────────────┘
                           │
         ┌─────────────────────────────────────┐
         │ ENLARGE OR REDUCE IMAGE OF EACH PRINT │ ~S05
         │   BAND BASED ON SCALING FACTOR      │
         └─────────────────┬───────────────────┘
                           │
                    ┌─────────────┐
                    │     END     │
                    └─────────────┘
```

[FIG. 11]

(a)

300

(b)

[FIG. 12]

(a)

(b)

300

EP 2 275 988 A1

[FIG. 13]

(b)

(a)

21

[FIG. 14]

## INTERNATIONAL SEARCH REPORT

| | International application No. |
|---|---|
| | PCT/JP2009/069733 |

**A. CLASSIFICATION OF SUBJECT MATTER**
*G06T3/00*(2006.01)i, *G06F3/12*(2006.01)i

According to International Patent Classification (IPC) or to both national classification and IPC

**B. FIELDS SEARCHED**

Minimum documentation searched (classification system followed by classification symbols)
G06T3/00, G06F3/12

Documentation searched other than minimum documentation to the extent that such documents are included in the fields searched
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2007-8110 A (Mimaki Engineering Co., Ltd.), 15 January 2007 (15.01.2007), paragraphs [0021] to [0024]; fig. 1 (Family: none) | 1-6 |
| Y | JP 2004-82442 A (Mastermind Co., Ltd.), 18 March 2004 (18.03.2004), paragraphs [0019] to [0020] (Family: none) | 1-6 |
| Y | JP 8-290627 A (Canon Inc.), 05 November 1996 (05.11.1996), abstract (Family: none) | 1-6 |

☒ Further documents are listed in the continuation of Box C. ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 27 January, 2010 (27.01.10) | 09 February, 2010 (09.02.10) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.

PCT/JP2009/069733

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 9-161092 A  (SNK Corp.),<br>20 June 1997 (20.06.1997),<br>abstract; claims 1 to 4<br>& US 5940068 A | 1-6 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007008110 A